(19) Europäisches Patentamt
European Patent Office
Office européen des brevets

(11) Veröffentlichungsnummer: **0 166 686**
**B1**

(12) **EUROPÄISCHE PATENTSCHRIFT**

(45) Veröffentlichungstag der Patentschrift: **09.05.90**

(51) Int. Cl.$^5$: **H 02 K 11/00**

(21) Anmeldenummer: **85810249.4**

(22) Anmeldetag: **30.05.85**

(54) **Entstörungsanordnung für einen Reihenschlussmotor.**

(30) Priorität: **28.06.84 DE 3423906**

(43) Veröffentlichungstag der Anmeldung:
**02.01.86 Patentblatt 86/01**

(45) Bekanntmachung des Hinweises auf die Patenterteilung:
**09.05.90 Patentblatt 90/19**

(84) Benannte Vertragsstaaten:
**CH DE FR GB IT LI NL SE**

(56) Entgegenhaltungen:
**DE-A-2 813 110**
**DE-A-2 931 724**
**DE-C- 411 670**

(73) Patentinhaber: **HILTI Aktiengesellschaft**
**FL-9494 Schaan (LI)**

(72) Erfinder: **Schuster, Hermann**
**Pfingstrosenstrasse 1**
**D-8000 München 70 (DE)**

(74) Vertreter: **Wildi, Roland**
**Hilti Aktiengesellschaft Patentabteilung**
**FL-9494 Schaan (LI)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 166 686 B1

**Beschreibung**

Die Erfindung betrifft eine Entstörungsanordnung für einen Reihenschlußmotor mit einem die Stromzuführleitungen überbrückenden störschutzkondensator, der üblicherweise auch als "X-Kondensator" bezeichnet wird.

Bei Elektromotoren, insbesondere bei Kleinmotoren, wie sie in Haushaltsgeräten (Waschmaschinen, Küchenmaschinen, Brotschneidemaschinen etc.) und Elektrowerkzeugen (Bohrmaschinen, Handschleifgeräten, etc.) verwendet werden und typischerweise eine Nennleistung von wenigen bis zu einigen hundert Watt aufweisen, sind zur Funkentstörung besondere Schaltungsmaßnahmen zu treffen, die einen zusätzlichen, für den Zweck des Motors eigentlich nicht erforderlichen Aufwand darstellen.

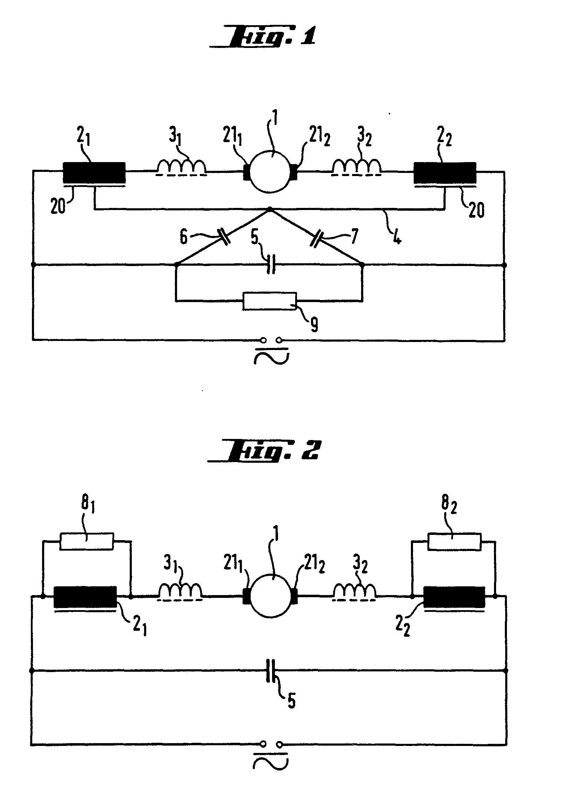

Eine bekannte und übliche Entstörungsanordnung für Motoren, z. B. Universal- oder Reihenschluß-Kommutatormotoren, in Geräten der genannten Art ist in Fig. 1 der beigefügten Zeichnung dargestellt. Die unmittelbar mit den beiden Polen des Netzes verbundenen Stator- oder Feldspulen $2_1$, $2_2$ liegen jeweils mit einer Entstördrossel $3_1$ bzw. $3_2$ über die Kohlebürsten $21_1$ bzw. $21_2$ mit dem Anker (Rotor) 1 in Reihe. Das Statorblechpaket 20 ist zur Ableitung unsymmetrischer Störspannungen durch den sogenannten b-Leiter 4 mit dem Y-Kondensator verbunden. Die Netzanschlüsse sind durch einen Entstörkondensateor 5 in der Größenordnung von beispielsweise 0,2 µF überbrückt, dem, falls notwendig, noch ein Entladewiderstand 9 in der Größenordnung von 1 MΩ parallelgeschaltet ist. Bei Motoren insbesondere für Handwerkzeuge, wie Handbohrmaschinen, werden außerdem noch Y-Kondensatoren, das sind Kondensatoren 6, 7, mit erhöhter Sicherheit und begrenzter Kapazität in der Größenordnung von einigen hundert Pico-Farad (pF) vorgesehen, die den b-Leiter 4 mit den beiden Polen des Netzanschlusses verbinden. Als weitere Maßnahme zur Entstörung ist es auch bekannt, die Feldspule (n) durch einen zusätzlichen parallel geschalteten Kondensator zu überbrücken und/oder einen weiteren, parallel zum Anker liegenden Kondensator zu verwenden (vgl. DE—A—2 813 110). Als besonders kritisch hinsichtlich des Störpegels, insbesondere im Störungsbereich von 150 kHz bis etwa 3 MHz, wird der Betrieb von Handwerkzeugen unter den Testbedingungen des Anlegens einer sogenannten "künstlichen Hand" an das Gerätegehäuse im Bereich des Getriebes oder des Motors angesehen. Um für diese Testbedingungen die üblichen Grenzwerte, beispielsweise nach DIN 57 875/VDE 0875, CISP 14, 15, Amtsblatt der Europäischen Gemeinshaft, 19. Jahrgang, Nr. L 336 vom 04. Dezember 1976 und 25. Jahrgang, Nr. L 222 vom 30. Juli 1982, einhalten zu können, muß der X-Kondensator 5 einen vergleichsweise großen Wert aufweisen, was wiederum den Entladewiderstand 9 (X-Kondensator >0,1 µF) erforderlich macht. Insgesamt wirkt eine solche Entstörungsanordnung wie ein relativ kompliziertes Filter höherer Ordnung, für dessen Frequenzgang eine Vielzahl von Einflußgrößen maßgeblich ist.

Zur Verringerung des Aufwands für die Entstörung elektrischer Maschinen ist es bekannt, als Entstördrosseln die in dem zu entstörenden Gerät bereits vorhanden Induktivitäten zu verwenden und gegebenenfalls die betriebsmäßig notwendigen Induktivitäten weiter zu unterteilen, wobei die so entstehenden Teilinduktivitäten durch Querkondensatoren überbrückt sind (vgl. DE-AS 10 14 617). Bekannt ist auch die Verwendung von Vierpol-Kondensatoren anstelle des X-Kondensators und der Y-Kondensatoren. Damit wird eine gute Entstörung insbesondere im UKW-Bereich erreicht. Vierpol-Kondensatoren sind jedoch vergleichsweise teuer und in manchen Anwendungsfällen ergeben sich räumliche Schwierigkeiten, so daß relativ lange Zuleitungen vorgesehen werden müssen mit anderen nachteiligen Folgen. Schließlich ist es zur Entstörung von Gleichstrom-Reihenschlußmotoren zur Vermeidung der Entstördrosseln auch bekannte, die beiden Feldspulen des Motors über Gleichrichter antiparallel in die Netzzuleitung eines Brückengleichrichters zu schalten (vgl. EP—AI—0 039 764). Diese Lösung des Entstörproblems ist jedoch auf Gleichstrommotoren der genannten Gattung beschränkt.

Der Erfindung liegt die Aufgabe zugrunde, den Aufwand für die Entstörung von Reihenschlußmotoren kleiner bis mittelerer Leistung, wie sie insbesondere in Elektrohandwerkzeugen verwendet werden, zu verringern und gleichzeitig die Entstörwirkung zu verbessern.

Die erfindungsgemäße Lösung ist dadurch gekennzeichnet, daß der oder den Feldspule(n) bzw. Statorspule(n) (jeweils) ein Ohm'scher Widerstand parallelgeschaltet ist.

Vorteilhafte Weiterbildungen des Erfindungsgedankens sind in den Unteransprüchen gekennzeichnet.

Besonders vorteilhaft ist es, den relativ hochohmigen, den Statorspulen oder wenigstens einigen Windungsabschnitten der Statorspulen parallelzuschaltenden Widerstand als eine galvanisch mit der Spulenwicklung gekoppelte hochohmige, leitfähige Teil-Beschichtung zu verwirklichen. Dadurch wird bei der Fertigung das Einlöten eines besonderen Widerstands vermieden.

Zwar ist es für Funkempfangs- und Sendeanlagen, die mit einer Entstördrossel im Eingangsbereich ausgerüstet sind, bereits bekannt, Eigenresonanzen mit einem Widerstand zu bedämpfen (vgl. DE—C—411 670). Da eine Entstördrossel jedoch in ihrer technischen Wirkung kaum mit der Statorspule eines Universalmotors zu vergleichen ist, war das an sich seit Jahrzehnten bekannte Prinzip auch deshalb nicht auf Motoren der hier in Rede stehenden Art übertragen worden, weil nicht erkennbar war, daß sich dadurch das Entstörproblem entscheidend vereinfachen ließe.

Durch zahlreiche Versuche wurden insbesondere für Motoren mit Nennleistungen N≤700 W optimale Werte für den bzw. die der (den) Statorspule (n) parallel zu schaltenden Widerstand (Widerstände) im Bereich von beispielsweise 1 kΩ≤R≦15 kΩ ermittelt mit optimalen Werten für den Frequenzgang des Störpegels bei R=4,7 bis 5,6 kΩ.

Überraschenderweise hat sich gezeigt, daß durch die erfindungsgemäße Maßnahme eine erhebliche Einsparung an Bauelementen und Einbauzeit bei gleichzeitiger Verbesserung der Entstörwirkung erreicht werden konnten, da für einige Arten von Motoren, insbesondere für Elektrohandwerkzeuge wie Bohrmaschinen und dergleichen, nicht nur die Entstördrosseln und der b-Leiter samt Y-Kondensatoren entfallen, sondern überdies ein wesentlich kleinerer Wert für den X-Kondensator als ausreichend ermittelt wurde, was außerdem zur Folge hat, daß auch noch der dem X-kondensator parallelgeschaltete Entladewiderstand entfallen konnte.

Selbst für Motoren, die, wie bei Handbohrmaschinen, unter den erschwerenden Bedingungen bei Anlegen einer sogenannten "künstlichen Hand" am Getriebehals getestet werden, ergab sich eine erhebliche Kosteneinsparung durch eine wesentliche Verkleinerung des Kapazitätswerts für den X-Kondensator, wodurch ebenfalls die bisher erforderliche Verwendung eines Entladewiderstands überflüssig wurde.

Die Erfindung und vorteilhafte Einzelheiten werden nachfolgend unter Bezug auf die Zeichnung in beispielsweisen Ausführungsformen näher erläutert. Es zeigen

Fig. 1 eine bereits erläuterte, herkömmliche Entstörrungsanordnung für Reihenschlußmotoren;

Fig. 2 ein erstes Ausführungsbeispiel einer erfindungsgemäßen Entstörungsanordnung;

Fig. 3 ein zweites Ausführungsbeispiel einer erfindungsgemäßen Entstörungsanordnung, die besondere Kosten- und Fertigungsvorteile bietet;

Fig. 4 die praktische Verwirklichung der anhand der Fig. 3 erläuterten Ausführungsform der Erfindung;

Fig. 5 eine weitere, insbesondere hinsichtlich eines optimalen Abgleichs vorteilhafte Ausführungsform der Erfindung;

Fig. 6 ein Schaltbild zur Ausführungsform nach Fig. 5; und

Fig. 7 bis 9 Meßkurven von Funkstörspannungsmessungen an Reihenschlußmotoren, die einerseits mit einer bekannten Entstörungsanordnung ausgerüstet waren im Vergleich zu Motoren desselben Typs andererseits, die mit der erfindungsgemäßen Entstörungsanordnung beschaltet waren.

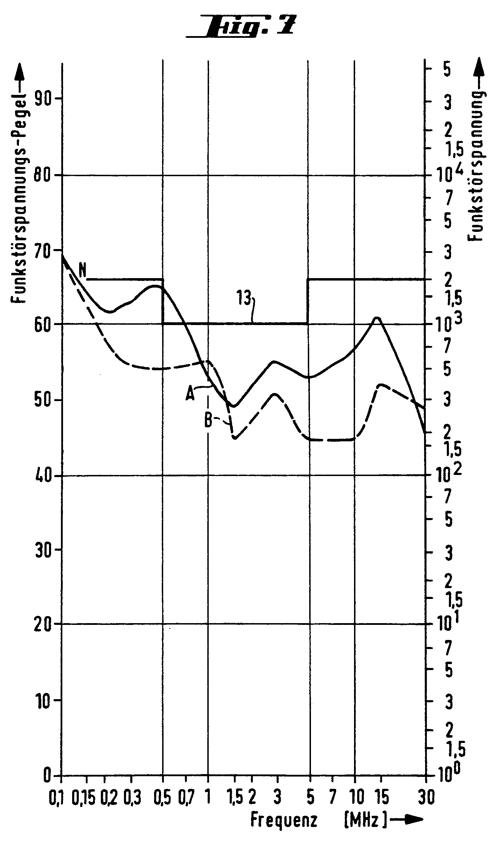

Die Fig. 2 zeigt ein erstes Ausführungsbeispiel der Erfindung. Entsprechende Bauteile sind mit den gleichen Bezugshinweisen gekennzeichnet wie in Fig. 1, so daß die nochmalige Erläuterung erübrigt werden kann. Wie die Schaltungsanordnung erkennen läßt, ist den beiden Statorspulen $2_1$ bzw. $2_2$ jeweils ein Widerstand $8_1$ bzw. $8_2$ parallelgeschaltet. Diese beiden (Dämpfungs-)Widerstände $8_1$ bzw. $8_2$ liegen im oben genannten Widerstandsbereich von beispielsweise 1 kΩ bis 15 kΩ; die Widerstandswerte können, müssen jedoch nicht, gleich gewählt sein. Oftmals genügt es, nur eine Spule zu beschalten. Für den Sonderfall einer Phasenanschnittsteuerung sollte zur Erreichung optimaler Ergebnisse nur die vom Triac 14 entfernt liegende Spule (siehe Fig. 6) beschaltet werden. Bei der in Fig. 2 gezeigten Ausführungsform sind die Entstördrosseln $3_1$ und $3_2$ vorhanden. Nicht vorhanden hingegen ist der b-Leiter 4 samt Y-Kondensatoren 6, 7 sowie der Entladewiderstand 9. Gegenüber der Ausführungsform nach Fig. 1 ist außerdem der Wert des X-Kondensators 5 deutlich verringert. Es wurde festgestellt, daß bei Vorhandensein der (Dämpfungs-) Widerstände $8_1$ bzw. $8_2$ ein Wert von etwa 0,1 µF bis 0,15 µF für den X-Kondensator 5 ausreichend ist. Bei Werten ≦0,1 µF für den X-Kondensator 5 kann unter Sicherheitsgesichtspunkten auf den Entladewiderstand 9 verzichtet werden.

Das Funkstörspannungs-Meßdiagramm der Fig. 9, das den Richtlinien von VDE 0875 entspricht, wurde bei einer Entstörungsbeschaltung gemäß Fig. 2 gemessen, wobei also die Entstördrosseln $3_1$, $3_2$ vorhanden, jedoch der b-Leiter 4 sowie die Y-Kondensatoren 6, 7 und der Entladewiderstand 9 nicht vorhanden waren. Der Wert des X-Kondensators betrug C=0,1 µF. Die Größe der Dämpfungswiderstände $8_1$ bzw. $8_2$ war einmal zu R=1 kΩ (Kurve $B_1$) und im anderen Fall zu R=11 kΩ (Kurve $B_2$) gewählt. Die für Motornennleistungen N≦700 W maßgebliche Grenzkurve bei Funkstörgrad N ist mit 13 gekennzeichnet (vgl. VDE 0875, § 3.1.1.1 und 3.1.1.3).

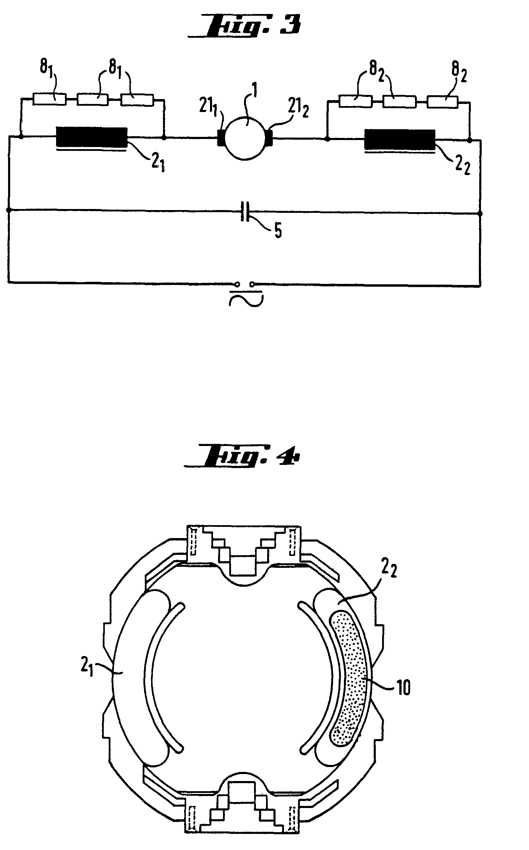

Die Fig. 3 verdeutlicht eine besonders vorteilhafte Ausführungsform der Erfindung. Die den Statorspulen $2_1$ bzw. $2_2$ parallelgeschalteten Widerstände $8_1$ bzw. $8_2$ sind als Reihenschaltungen mehrerer Teilwiderstände dargestellt. Damit soll—was in Fig. 4 gezeigt ist—verdeutlicht werden, daß die den Statorspulen $2_1$, $2_2$ erfindungsgemäß parallelzuschaltenden Widerstände $8_1$, $8_2$ als galvanisch mit der oder den Statorspulenwirklung(en) gekoppelte, hochohmige leitfähige Teil-Beschichtung 10 verwirklicht sein können. Dies wird in der Praxis dadurch erreicht, daß im Bereich der Wickelköpfe der bereits fertiggewickelten Statorspulen der Draht-Isolationslack partiell entfernt wird, z. B. durch Anschleifen. Anschließend wird der so behandelte Bereich der Statorspulen-Wickelköpfe mit einer zweckentsprechend gewählten Widerstandslackschicht bestrichen, wodurch einzelne, jedoch nicht notwendigerweise alle, Windungen der Statorspule durch einen entsprechenden hochohmigen Widerstand überbrückt sind und die in Fig. 3 angedeutete Reihenschaltung der einzelnen Teilwiderstände durch den Draht der Statorspule gegeben ist. Durch die Auswahl des Widerstandslacks, die Art des Entfernens der Lackisolierung der Statorwickelköpfe sowie durch die Dicke des Schichtauftrags kann die Größe der Widerstandswerte für die Dämpfungswiderstände $8_1$ bzw. $8_2$ in weiten Grenzen variiert und insbesondere aber auch für die beiden Statorspulen unterschiedlich festgelegt werden.

Bei der Ausführungsform nach Fig. 3 fehlen die

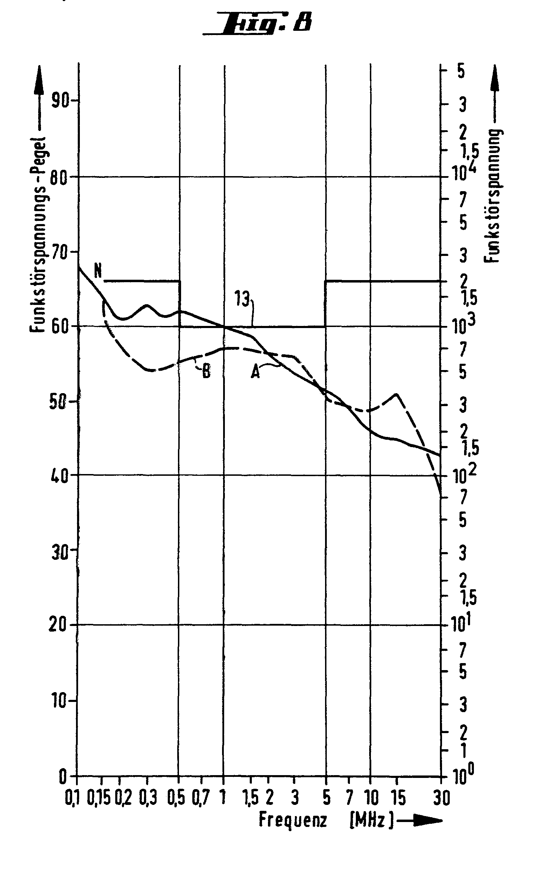

Drosseln $3_1$, $3_2$ vollständig, ebenso der b-Leiter 4 und die Y-Kondensatoren 6, 7 sowie der Entladewiderstand 9. Trotzdem werden, wie das Funkstörspannungs-Meßdiagramm der Fig. 7 erkennen läßt, sehr befriedigende Werte für die Unterdrückung der Störspannung erreicht. Im Meßdiagramm der Fig. 7 verdeutlicht die Kurve A eine Meßreihe, bei der die Dämpfungswiderstände $8_1$, $8_2$ in Fig. 3 nicht vorhanden waren. Ersichtlicherweise werden im kritischen Mittelwellenbereich Störspannungswerte erreicht, die die obere Grenzkurve 13 überschreiten und auch im Kurzwellenbereich treten unerwüscht hohe Störspannungspegel auf. Nach Aufbringen der erfindungsgemäßen Dämpfungswiderstände $8_1$, $8_2$ wurden bei Widerstandswerten von $R \approx 4{,}7\ k\Omega$ Störspannungspegel gemäß Kurve B in Fig. 7 gemessen, die im gesamten vorgegebenen Frequenzspektrum von 0,1 bis 30 MHz deutlich unter der oberen Grenzwertkurve 13 liegen und ein sehr befriedigendes Ergebnis erkennen lassen. Der Wert des X-Kondensators 5 betrug $C=0{,}1\ \mu F$.

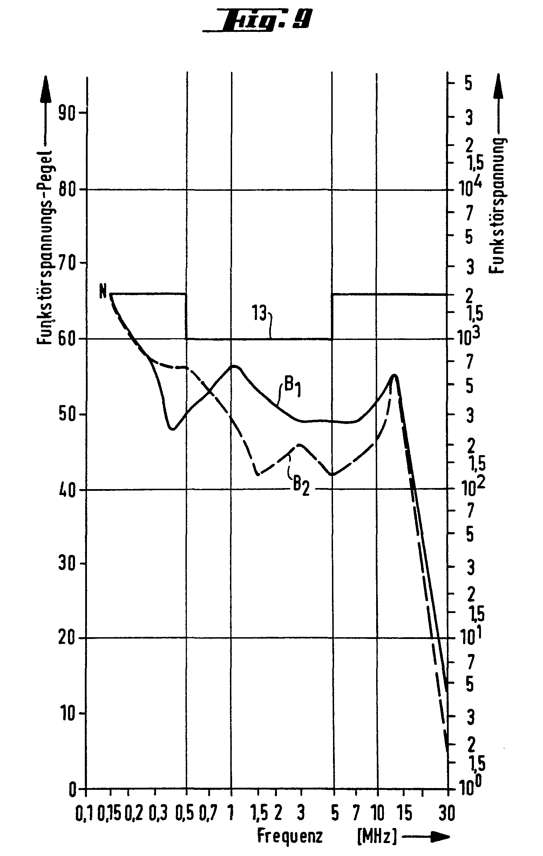

Die Fig. 8 gibt—wiederum bei einer Entstörungsbeschaltung gemäß Fig. 3—die Verhältnisse bei der gleichen Motortype wieder, die auch den Meßreihen der Fig. 7 und 9 zugrunde lagen, jedoch bei ungünstigster Schalterstellung einem dem Motor zur Drehzahlregulierung vorgeschalteten Phasenanschnittsteuerung (vgl. auch Fig. 6). Auch in diesem Fall war die Entstörungsanordnung gemäß Fig. 3 vorgesehen, d. h. der b-Leiter 4 (vgl. Fig. 1) sowie die Y-Kondensatoren 6 und 7 und der Entladewiderstand 9 sowie die Drosseln $3_1$, $3_2$ waren nicht vorhanden. Bei der ersten Meßreihe ohne Dämpfungswiderstände $8_1$, $8_2$ (vgl. Fig. 3) ergab sich bei der Funkstörspannungs-Messung die Kurve A, die wiederum im kritischen Mittelwellenbereich deutliche Überschreitungen der zulässigen Störspannungs-Grenzwerte (Kurve 13) erkennen läßt. Nach Einsetzen der (des) Dämpfungswiderstände (Dämpfungswiderstands) $8_1$, $8_2$ bzw. Anbringen der Widerstands-Teilbeschichtung 10 (vgl. Fig. 4) wurden sehr befriedigende Dämpfungswerte gemäß Kurve B in Fig. 8 erreicht.

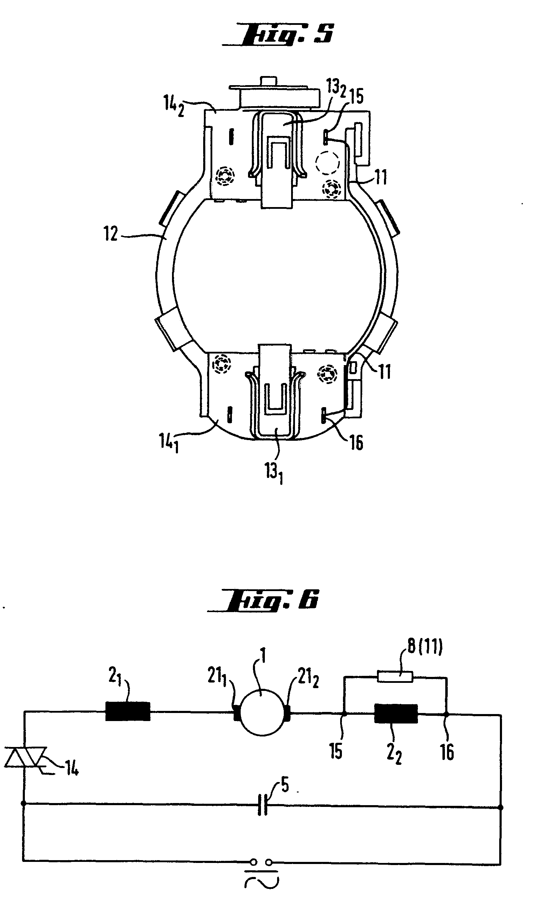

Die Fig. 5 läßt eine ebenfalls für manche Anwendungsfälle besonders vorteilhafte Ausführungsform der Erfindung erkennen, ausgeführt für den Fall, daß nur eine Statorspule beschaltet ist. Diese Figur zeigt von einer Stirnseite her einen Bürsten- oder Kohlehalter 12 in Form eines vor dem Stator sitzenden Rings aus spritzgeformtem Kunststoff mit angeformten Anschlußplatten $14_1$, $14_2$, auf denen in bekannter Weise Kohlehalter $13_1$ bzw. $13_2$ montiert sind. Die Endanschlüsse für eine der Statorspulen sind mit 15 bzw. 16 bezeichnet. Zwischen diesen Spulenendanschlüssen (siehe Fig. 6) erstreckt sich ein beigeformbarer Streifen 11 aus elektrisch leitendem Kunststoff, der vorteilhafterweise flächenintegriert in eine ausgesparte Nut des Kohlehalters 12 eingepaßt sein kann. Dieses den Dämpfungswiderstand 8 verwirklichende Teil könnte auch in einer Mehrkomponentenspritzverfahrenstechnik aus leitendem Kunststoff zusammen mit dem übrigen Kohlehalter abgespritzt werden. Dieser Streifen 11 aus elektrisch leitendem Kunststoff stellt den Dämpfungswiderstand 8 dar. Mit dieser Art einer praktischen Verwirklichung der erfindungsgemäß vorgesehenen Dämpfungswiderstände kann vor allem ein sehr individueller Abgleich der Entstörungsanordnung auf einfache Weise erreicht werden. Der Streifen 11 aus elektrisch leitfähigem Kunststoff läßt sich hinsichtlich seines Widerstandswerts durch Beschneiden verändern, so daß auf einfache Weise unterschiedliche Widerstandswerte für die rechte bzw. linke Statorspule verwirklicht werden können.

Bei voll befriedigender Entstörwirkung läßt sich die erfindungsgemäße Entstörungsanordnung für Reihenschlußmotoren ersichtlicherweise deutlich preiswerter und fertigungstechnisch günstig verwirklichen.

**Patentansprüche**

1. Entstörungsanordnung für einen Reihenschlußmotor mit einem die Stromzuführleitungen überbrückenden Störschutzkondensator (X-Kondensator) (5), dadurch gekennzeichnet, daß mindestens zu einer der Feldspulen (2) ein Ohm'scher Widerstand (8) parallelgeschaltet ist.

2. Entstörungsanordnung nach Anspruch 1, dadurch gekennzeichnet, daß die Größe des (der) der (den) Feldspule(n) ($2_1$, $2_2$) parallelgeschalteten Widerstands (Widerstände) ($8_1$, $8_2$) so gewählt ist, daß der Funkstörspannungspegel im Frequenzbereich 0,1 bis 30 MHz deutlich unter eine Grenzwertkurve (13) des für eine vorgegebene aufgenommene Motorleistung zulässigen Störgrads reduziert werden.

3. Entstörungsanordnung nach Anspruch 1 oder 2, dadurch gekennzeichnet, daß der Störschutzkondensator (5) eine vergleichsweise kleine Kapazität aufweist.

4. Entstörungsanordung nach Anspruch 3, dadurch gekennzeichnet, daß der Kapazitätswert des Störschutzkondensators (5) im Bereich von 0,02 bis 0,2 µF liegt und vorzugsweise zu etwa 0,05 bis 0,1 µF gewählt ist.

5. Entstörungsanordnung nach einem der vorstehenden Ansprüche, dadurch gekennzeichnet, daß der (die) Ohm'sche(n) widerstand (Widerstände) ($8_1$, $8_2$) als (eine) galvanisch mit der Fledspulenwicklung gekoppelte hochohmige leitfähige Teil-Beschichtung (10) der Statorspule(n) (2) verwirklicht ist (sind).

6. Entstörungsanordnung nach Anspruch 5, dadurch gekennzeichnet, daß die hochohmige Teil-Beschichtung (10) als Widerstandslackschicht oder als leitfähige Kunststoffschicht unmittelbar auf einen freiliegenden Außenabschnitt der fertigen Feldspulenwicklung (2) so aufgebracht ist, daß mehrere zuvor teilweise abisolierte Windungen der Feldspulenwicklung (2) durch elektrisch in Reihe geschaltete Teilwiderstände überbrückt sind.

7. Entstörungsanordnung nach einem der Ansprüche 1 bis 4, dadurch gekennzeichnet, daß der Ohm'sche Widerstand aus einer in den Kohlehalter des Motors integrierten Brüche aus einem elektrisch leitfähigen, relativ hochomigen Kunststoff (11) besteht, dessen Enden mit den Anschlußenden (15, 16) der Feldspulenwicklung (2) galvanisch verbunden sind.

**Revendications**

1. Système antiparasite pour un moteur-série comprenant un condensateur antiparasite (condensateur X) (5), monté en shunt par rapport aux câbles d'amenée de courant caractérisé en ce qu'une résistance ohmique (8) est montée en parallèle avec au moins l'une des bobines excitatrices (2).

2. Système antiparasite selon la revendication 1, caractérisé en ce que la grandeur de la (des) résistance(s) ($8_1$, $8_2$) montée(s) en parallèle avec la (les) bobine(s) excitatrice(s) ($2_1$, $2_2$) est choisie de telle façon que le niveau de la tension perturbatrice dans la gamme des fréquences de 0,1 à 30 MHz est réduit nettement en-dessous d'une courbe de valeur limite (13) du degré de perturbation admissible pour une puissance absorbée prédéterminée du moteur.

3. Système antiparasite selon l'une des revendications 1 ou 2, caractérisé en ce que le condensateur antiparasite (5) a une capacité relativement faible.

4. Système antiparasite selon la revendication 3, caractérisé en ce que la capacité du condensateur antiparasite (5) se situe dans la plage entre 0,02 et 0,2 µF et est choisie de préférence entre environ 0,05 et 0,1 µF.

5. Système antiparasite selon l'une des revendications précédentes, caractérisé en ce que la (les) résistance(s) ohmique(s) ($8_1$, $8_2$), est (sont) réalisée(s) sous la forme d'un revêtement partiel conducteur de valeur ohmique élevée (10) de la (des) bobine(s) du stator (2) connecté directement avec l'enroulement de la bobine excitatrice.

6. Système antiparasite selon la revendication 5, caractérisé en ce que le revêtement partiel conducteur de valeur ohmique élevée (10) est appliqué directement, en tant que couche de vernis résistance ou de couche de matière plastique conductrice, sur une section extérieure dégagée de l'enroulement terminé de la bobine excitatrice (2) de telle façon que plusieurs spires préalablement dénudées de l'enroulement de la bobine excitatrice (2) sont shuntées par des résistances partielles montées électriquement en série.

7. Système antiparasite selon l'une des revendications 1 à 4, caractérisé en ce que la résistance ohmique est constituée par un pont en matière plastique (11) électriquement conductrice et de valeur ohmique relativement élevée, intégré au porte-charbon du moteur, dont les extrémités sont reliées directement aux extrémités de connexion (15, 16) de l'enroulement de la bobine excitatrice (2).

**Claims**

1. Interference-suppression arrangement for a series motor including an anti-interference condenser (X-condenser) (5), bridging the current-supply lines, characterised in that an Ohm resistor (8) is switched in parallel with at least one of the field spools (2).

2. Interference-suppression arrangement according to claim 1, characterised in that the size of the resistor(s) ($8_1$, $8_2$), switched in parallel with the field spool(s) ($2_1$, $2_2$), is selected such that the radio-interference-voltage level in the frequency range 0.1 to 30 MHz is clearly reduced to below a limit-value curve (13) of a permissible degree of interference of a given achieved motor output.

3. Interference-suppression arrangement according to claim 1 or 2, characterised in that the anti-interference condenser (5) has a comparably small capacity.

4. Interference-suppression arrangement according to claim 3, characterised in that the capacitive value of the anti-interference condenser (5) is in the region of 0.02 to 0.2 µF and preferably selected to be approximately 0.05 to 0.1 µF.

5. Interference-suppression arrangement according to one of the previous claims, characterised in that the Ohm resistor(s) ($8_1$, $8_2$) is/are constructed to be a high-ohm conductive partial layer (10) of the stator coil(s) (2), which layer is galvanically coupled with the field-coil winding.

6. Interference-suppression arrangement according to claim 5, characterised in that the high-ohm partial layer (10) is applied as a resistance-varnish layer or as a conductive plastics-material layer immediately onto a disposed exterior section of the finished field-coil winding (2) in such a manner that several, previously partially insulated turns of the field-coil winding (2) are bridged by resistance members, electrically switched in series.

7. Interference-suppression arrangement according to one of the claims 1 to 4, characterised in that the ohm resistor consists of a bridge, integrated in the carbon holder of the motor, made of electrically conductive, relatively high-ohm plastics material (11), the ends of which are galvanically connected with the connecting ends (15, 16) of the field-spool winding (2).

Fig. 1

1
$2_1$
$3_1$
$21_1$
$21_2$
$3_2$
$2_2$
20
20
4
6
5
7
9


Fig. 2

$8_1$
$8_2$
1
$3_1$
$21_1$
$21_2$
$3_2$
$2_1$
$2_2$
5

Fig. 3

8$_1$
8$_1$
8$_2$
8$_2$
21$_1$
1
21$_2$
2$_1$
2$_2$
5

Fig. 4

2$_2$
2$_1$
10

Fig. 5

14₂
13₂
15
11
12
11
14₁
13₁
16

Fig. 6

8(11)
1
2₁
21₁
21₂
15
2₂
16
14
5

Fig. 7

Funkstörspannungs-Pegel
90
80
70
60
50
40
30
20
10
0
N
13
A
B
Funkstörspannung
5
3
2
1,5
10⁴
7
5
3
2
1,5
10³
7
5
3
2
1,5
10²
7
5
3
2
1,5
10¹
7
5
3
2
1,5
10⁰
0,1 0,15 0,2 0,3 0,5 0,7 1 1,5 2 3 5 7 10 15 30
Frequenz [MHz]

Fig. 8

Funkstörspannungs-Pegel
Funkstörspannung
N
13
A
B
Frequenz [MHz]
0,1 0,15 0,2 0,3 0,5 0,7 1 1,5 2 3 5 7 10 15 30
0 10 20 30 40 50 60 70 80 90
$10^0$ $10^1$ $10^2$ $10^3$ $10^4$

Fig. 9

Funkstörspannungs-Pegel
Funkstörspannung
90
80
70
60
50
40
30
20
10
0
5
3
2
1,5
$10^4$
7
5
3
2
1,5
$10^3$
7
5
3
2
1,5
$10^2$
7
5
3
2
1,5
$10^1$
7
5
3
2
1,5
$10^0$
N
13
B1
B2
0,1 0,15 0,2 0,3 0,5 0,7 1 1,5 2 3 5 7 10 15 30
Frequenz [MHz]